Europäisches Patentamt

European Patent Office

Office européen des brevets

(19)

(11) Numéro de publication: **0 171 060 B1**

(12) **FASCICULE DE BREVET EUROPEEN**

(45) Date de publication du fascicule du brevet:
05.10.88

(51) Int. Cl.⁴: **H 02 B 1/20**

(21) Numéro de dépôt: **85109867.3**

(22) Date de dépôt: **06.08.85**

(54) **Dispositif de distribution électrique à basse tension.**

(30) Priorité: **07.08.84 FR 8412472**

(43) Date de publication de la demande:
**12.02.86 Bulletin 86/7**

(45) Mention de la délivrance du brevet:
**05.10.88 Bulletin 88/40**

(84) Etats contractants désignés:
**AT BE CH DE FR GB IT LI LU NL SE**

(56) Documents cités:
**DE - A - 1 515 788**
**DE - A - 2 729 854**
**DE - B - 2 625 380**
**FR - A - 2 509 539**
**US - A - 3 213 407**
**US - A - 3 219 887**

(73) Titulaire: **ALSTHOM, 38, avenue Kléber, F-75784 Paris Cédex 16 (FR)**

(72) Inventeur: **Cournet, Georges, 12 rue du Roy Gontran, F-71100 Chalon Sur Saone (FR)**
Inventeur: **Genelot, Jean-Pierre, 6, rue des AC d'AFN, F-71380 Saint Marcel (FR)**
Inventeur: **Gudefin, Patrice, 40 rue du Béarn Chatenoy Le Royal, F-71530 Chalon Sur Saone (FR)**

(74) Mandataire: **Weinmiller, Jürgen et al, Lennéstrasse 9 Postfach 24, D-8133 Feldafing (DE)**

## Description

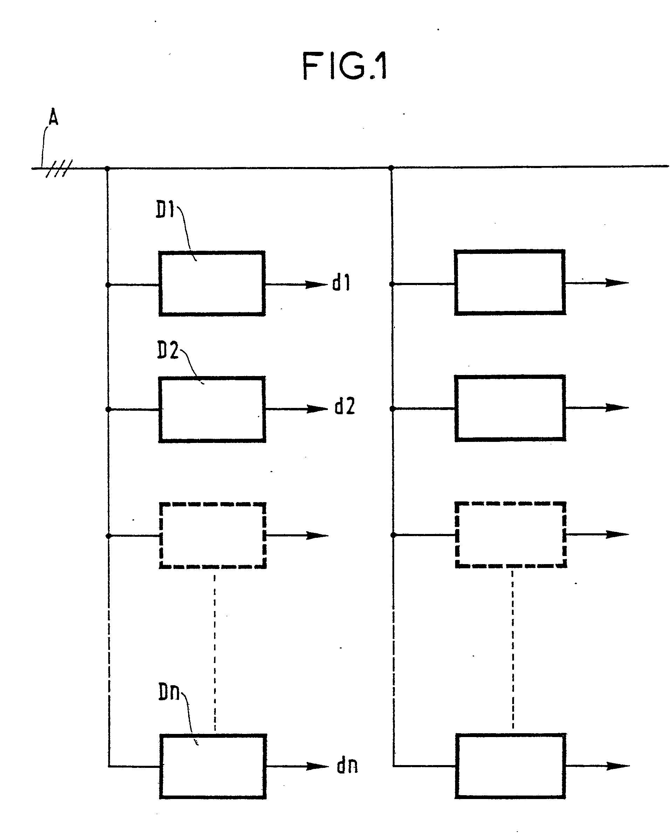

La présente invention est relative à un dispositif de distribution électrique à basse tension, du type représenté à titre d'exemple dans la figure 1 et comprenant une arrivée de courant A alimentant une ou plusieurs colonnes comportant n départs d1, d2,, dn à travers des disjoncteurs D1, D2,, Dn.

Chaque colonne comprend 3 barres de phase et une barre de neutre.

Dans les dispositifs connus, per exemple dans le document US-A-3 219 887, les barres sont disposées verticalement, les disjoncteurs présentant leurs bornes d'entrée horizontalement.

Comme un même dispositif peut comporter des disjoncteurs de plusieurs types ou calibres et que l'écartement des bornes est différent d'un type à l'autre, il en résulte que pour relier les disjoncteurs aux barres, il est nécessaire de réaliser des connexions de forme parfois complexe, de prix de revient élevé et d'entretien malaisé.

Un but de la présente invention est de réaliser un dispositif de distribution basse tension de moindre coût de revient et d'entretien, de fiabilité améliorée et autorisant l'utilisation de types variés de disjoncteurs.

L'invention a pour objet un dispositif de distribution électrique à basse tension comprenant un jeu de barres de puissance et une pluralité de départs protégés par un appareil de coupure, caractérisé en ce qu'il comprend une structure isolante moulé e comprenant deux parois verticales parallèles séparées par une cloison verticale transversale, des profilés métalliques étant insérés dans la cloison transversale et débouchant de part et d'autre de celle-ci, d'un côté servant de support des barres et de l'autre comme prises de puissance, les extrémités desdites prises de puissance étant disposées selon les génératrices d'un cylindre d'axe vertical situé dans le plan de symétrie de la structure, ladite structure étant, du côté des prises, divisée par des cloisons horizontales définissant des alvéoles, l'alvéole pouvant recevoir une pièce isolante portant des pinces, lesdites pinces pinçant d'un côté l'une desdites prises et de l'autre un couteau métallique d'une borne d'un appareil à relier, ledit couteau passant par une ouverture de ladite pièce isolante située au milieu de celle-ci, de telle sorte que toutes les liaisons électriques entre les appareils et le dispositif de distribution se font selon une ligne unique d'embrochage.

L'invention sera bien comprise par la description ci-après d'un mode préféré de réalisation de l'invention, en référence au dessin annexé dans lequel:

— la figure 1 est un schéma électrique d'un dispositif de distribution basse tension,

— la figure 2 est une vue en élévation de face du dispositif selon l'invention,

— la figure 3 est une vue en élévation, de côté du dispositif selon la figure 2,

— la figure 4 est une vue partielle, en coupe selon la ligne IV–IV de la figure 2,

— les figures 5 à 8 sont des vues de dessus des prises de puissance équipant le neutre et les trois phases du dispositif selon la figure 2,

— la figure 9 est vue en coupe transversale d'un dispositif de distribution selon une variante de réalisation.

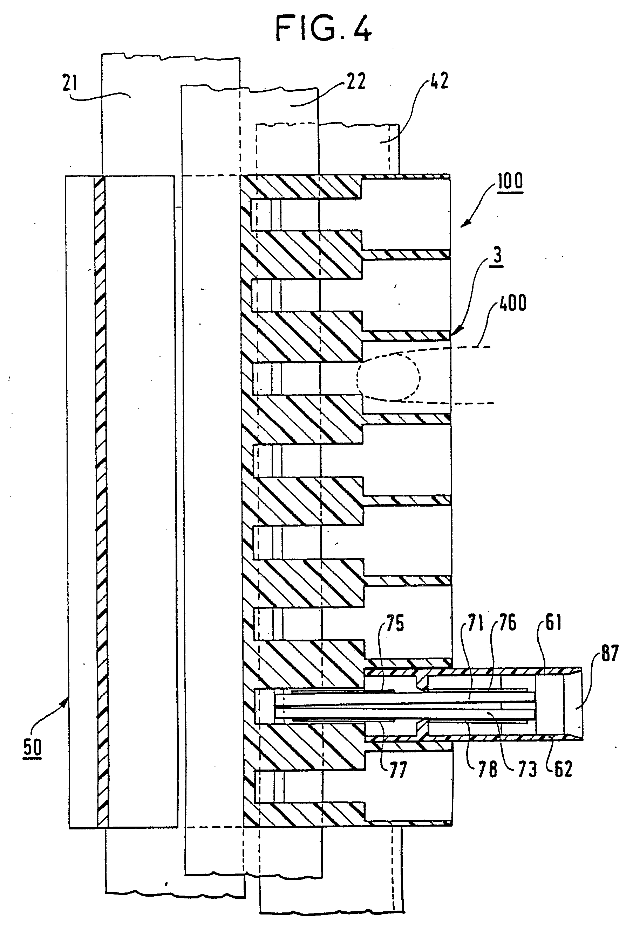

Comme le montrent les figures 4 à 9, le dispositif de distribution basse tension comporte une structure en matière isolante moulée comprenant deux parois verticales rectangulaires 1, 2 reliées par une cloison transversale 3.

Dans la cloison transversale, sont noyés des profilés 10, 20, 30 et 40 servant, d'un côté de la cloison 3, de support à des barres conductrices 11, 21, 31, 41 d'amenée de courant et de l'autre côté de la cloison, de prise de courant.

Les profilés sont disposés de manière que les extrémités 12, 22, 32, 42 des prises de courant constituent des génératrices d'un cylindre d'axe vertical situé dans le plan de symétrie de la structure moulée. La structure est divisée en étages, séparée par une distance égale au pas d'embrochage normalisé des disjoncteurs (un pas est de 25 mm en France).

Ces étages sont matérialisés par des parois horizontales venues de moulage. On pourra avantageusement réaliser des structures comportant huit pas, que l'on pourra superposer.

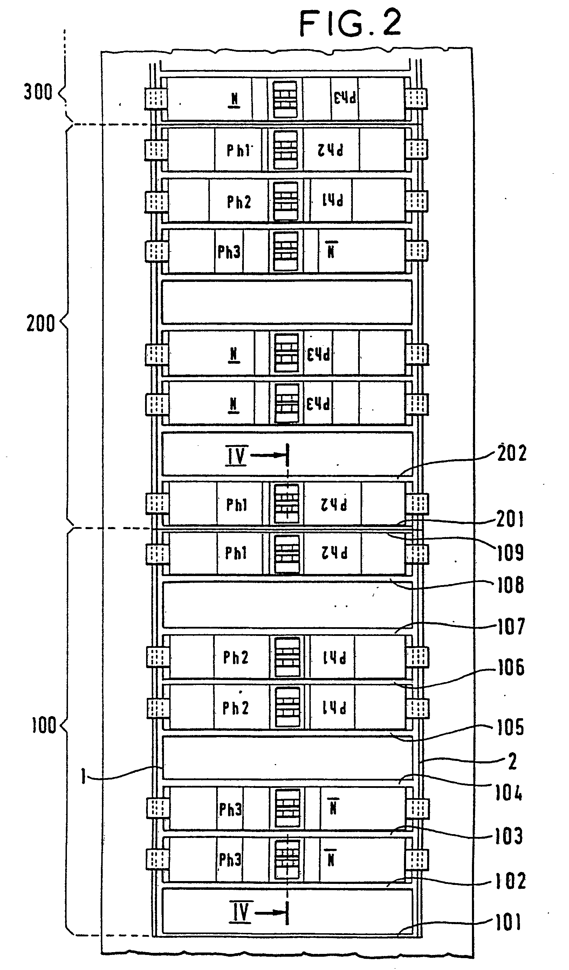

La figure 2 montre trois structures de huit pas référencées 100, 200 et 300, la structure supérieure 300 n'étant que partiellement resprésentée.

Les parois horizontales sont référencées 101, 102, 103, . . . 109, 201, 202, . . . 209, 301, 302, . . . 309.

Les parois extrêmes 101, 109, 201, 209, 301, 309 sont d'épaisseur moitié de celle des autres, pour respecter la multiplicité du pas du haut en bas de la colonne.

La structure moulée comprend donc un certain nombres d'alvéoles de part et d'autre de la paroi 3.

Côté barres, la structure est fermée par un capot moulé 50 présentant des cloisons parallèles de deux types:

— d'une part des cloisons groupées par deux telles que 51, 52 entre lesquelles s'engage une barre conductrice.

— d'autre part des cloisons individuelles telles que 53 s'engageant entre deux coloisons parallèles telles que 3A, 3B venues de moulage avec la structure.

Cette disposition permet une structure rigide sans nécessiter de pièces de fixation.

Le capot 50 a bien entendu, de préférence, la même hauteur que la structure, par exemple une hauteur de huit pas.

Côté prises de courant, les alvéoles sont garnies par des connecteurs qui vont être décrits maintenant.

Ces connecteurs comprennent tous une pièce isolante moulée enfermant des pinces métalliques.

Les connecteurs sont de deux types:

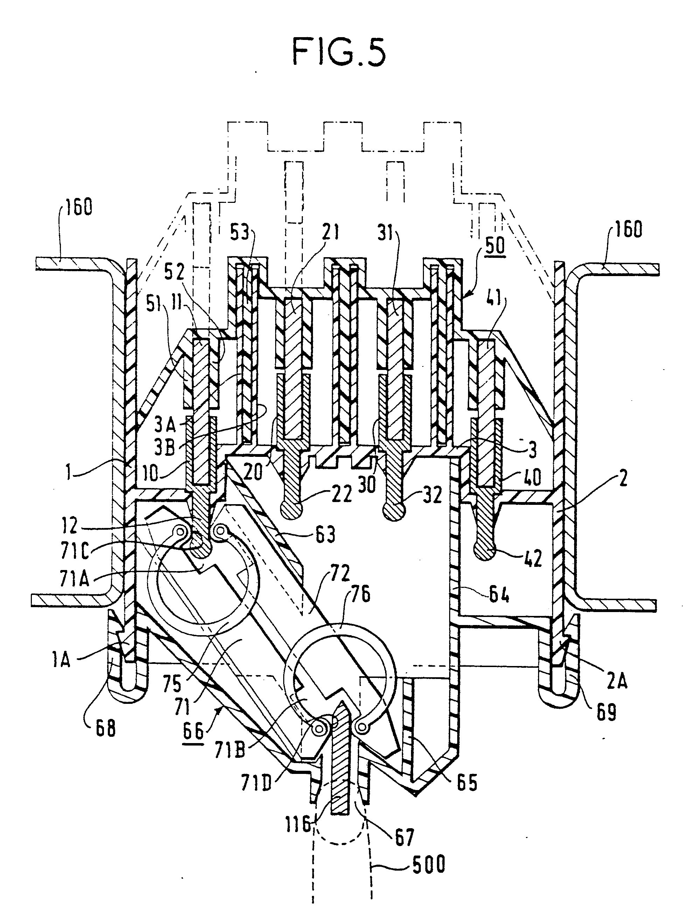

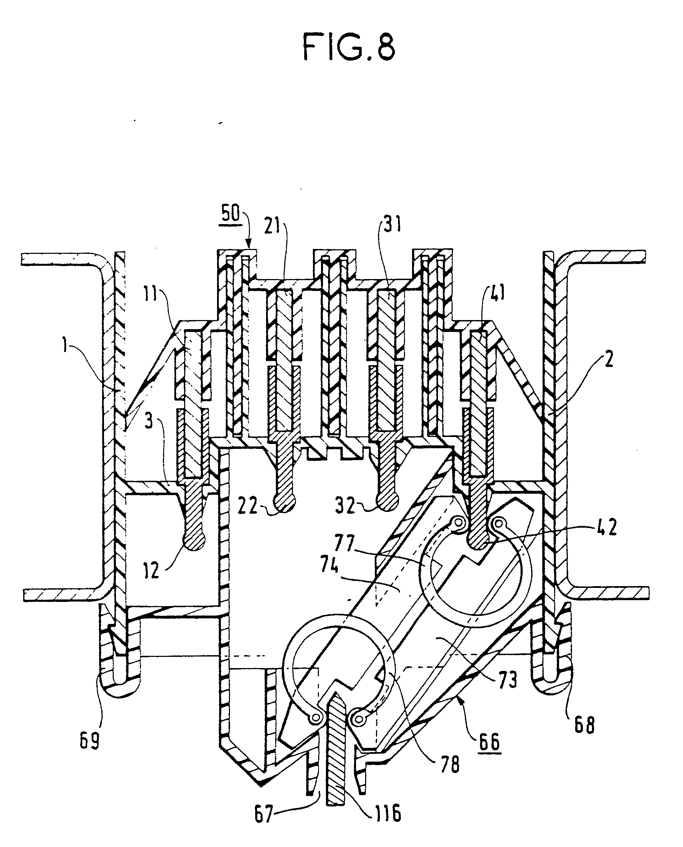

— le premier type sert à relier les prises extrêmes, c'est-à-dire les prises 12 (neutre, fig. 5) et 42 (phase III, fig. 8). Il suffit de retourner de 180 degrés un tel connecteur pour permettre soit la connexion avec la prise d'extême gauche, soit avec la prise d'extrême droite,

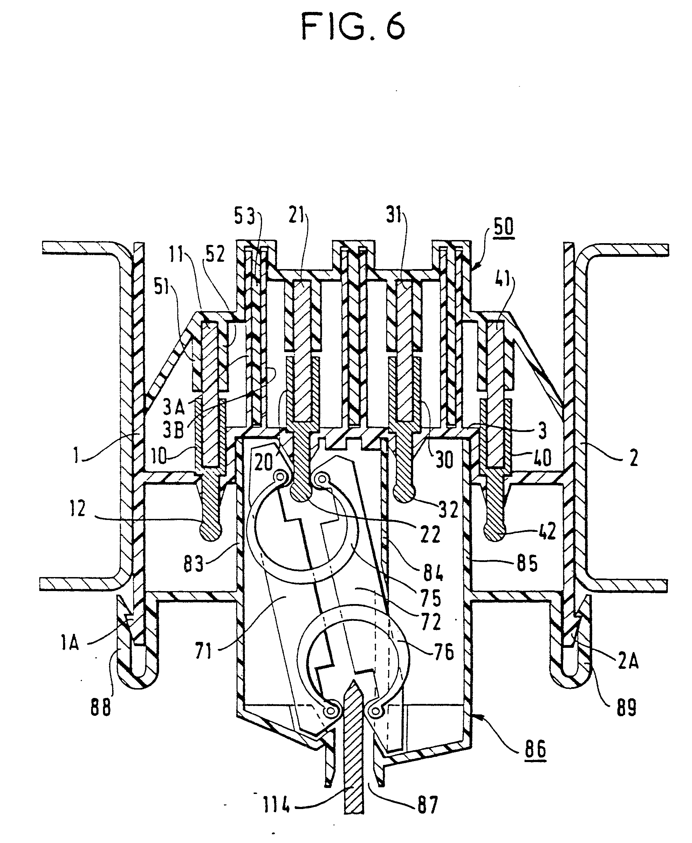

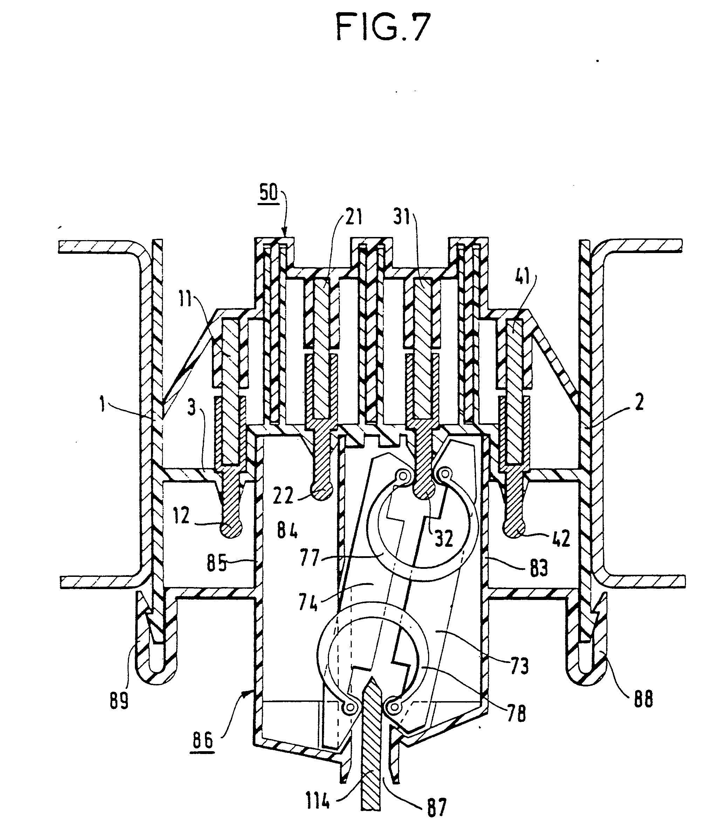

- le second type sert à relier les prises centrales 22 (phase I, fig. 6) et 32 (phase II, fig. 7).

Par simple retournement de ce connecteur, on connecte la prise de centre gauche ou la prise de centre droit.

En se référant aux figures 4 et 5 on voit qu'un connecteur du premier type comprend une pièce moulée formée de deux plaques parallèles 61 et 62 reliées par des cloisons perpendiculaires.

Deux cloisons, 63 et 64, isolent les prises à connecter 12, 42 des autres prises 22, 32.

Une autre cloison, 65, sert d'appui aux pinces métalliques.

Une autre cloison 66, sert de face avant du dispositif et présente une ouverture centrale 67 pour le passage d'un couteau d'entrée 116 du disjoncteur à relier, et deux pinces d'encliquetage 68 et 69 coopérant avec deux ergots 1A et 2A des parois 1 et 2 pour la fixation du connecteur.

La pièce moulée enferme des pinces métalliques comprenant quatre pièces, identiques, plates, sensiblement rectangulaires, 71, 72, 73, 74, se faisant face deux à deux et superposées deux à deux.

Chaque pièce comprend, sur un grand côté et vers chacune des extrémités de celui-ci une échancrure 71A, 71B et une partie arrondie 71C, 71D.

Les échancrures permettent l'introduction de la prise 12 et du couteau 116, alors que les arrondis favorisent un bon contact électrique.

Les pièces 71 et 72 sont reliées par deux clips métalliques élastiques 75 et 76, alors que les pièces 73 et 74 sont reliées par des clips 77 et 78.

Les connecteurs du deuxième type (figures 6 et 7) sont analogues à ceux du premier type.

Ils comprennent (figure 6) entre deux plaques parallèles, des cloisons 83, 84, 85 destinées à isoler la prise à connecter des autres prises, une cloison 86 servant de face avant, avec une ouverture centrale 87 pour le passage du couteau 114 de l'appareil à relier, et des pinces d'encliquetage 88, 89 aux parois de la structure moulée.

Les pinces de connexion sont identiques en formes et dimensions aux pinces précédemment décrites.

Cet avantage résulte de la disposition, spécifique à l'invention, des prises de courant. On note en outre que la mise en place des pinces peut s'effectuer en toute sécurité sous tension, ce qui facilite la maintenance.

On voit que le dispositif de l'invention ne comprend qu'une seule ligne d'embrochage, définie par les ouvertures (67, 87) alignées des pièces porte-pinces.

La modularité des alvéoles permet la mise en place d'appareils qui différent, soit par le type (selon les fabricants), soit par le calibre, soit par le nombre de phases, sans nécessiter aucun travail de connection.

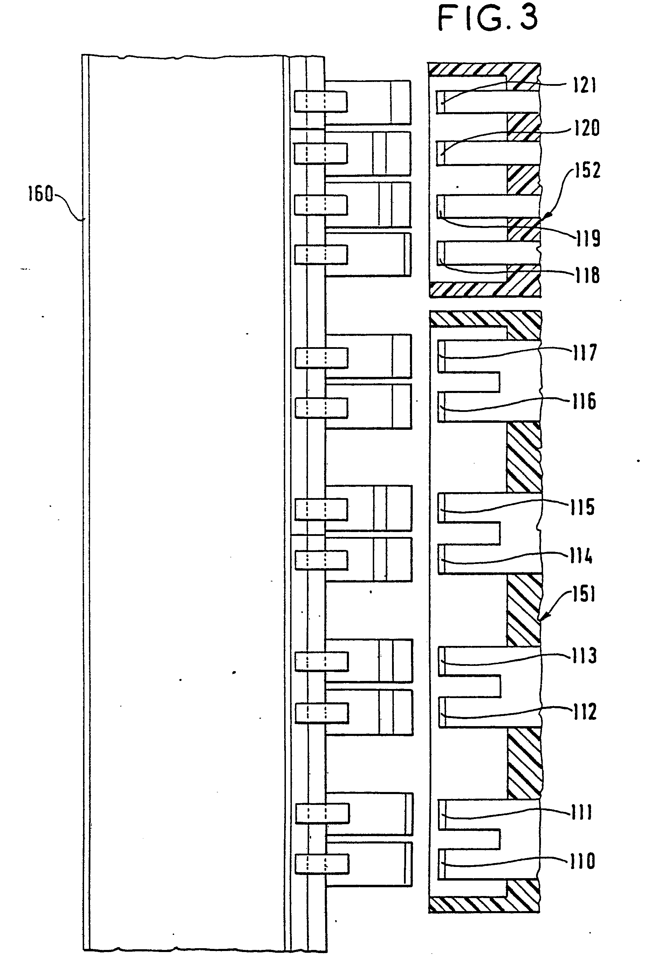

Ainsi, les figures 2 et 3 représentent une installation avec un premier disjoncteur (630A par phase) référencé 151 au pas de trois avec trois phases et neutre et un second disjoncteur (152 ou 315A par phase) au pas de un avec trois phases et neutre.

Pour chaque phase et pour le neutre du premier disjoncteur, on utilise deux alvéoles adjacentes permettant l'introduction de couteaux doubles 110–111, 112, 113, 114–115, 116–117.

Entre les alvéoles garnies, une alvéole est laissée vide.

Pour le second disjoncteur, on utilise 4 alvéoles adjacentes garnies, pour l'introduction de couteaux simples.

Les mentions PhI, PhII, PhIII, et N figurant sur les faces avants des pièces porte-pinces, à l'endroit et à l'envers, permettent immédiatement de connaître avec quelle barre la pièce porte-pince est électriquement reliée.

C'est la mention lisible à l'endroit qui, de préférence, fournit cette indication.

La structure moulée peut être maintenue par une charpente métallique extérieure 160, partiellement visible dans les figures 3 et 5.

La longueur des barres peut être ajustée à la puissance désirée, sans nécessiter d'autre modification au dispositif, comme le nombre des lignes en tireté de la figure 5.

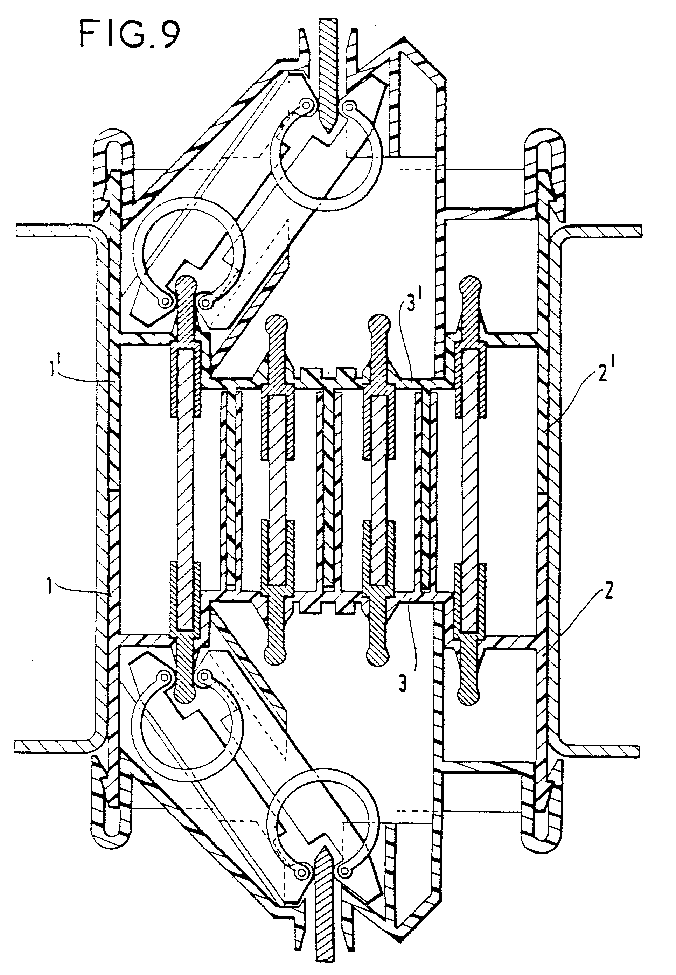

La figure 9 montre que le capot 50 peut être remplacé par une structure 1', 2', 3' identique à la structure 1, 2, 3 et utilisant les mêmes barres conductrices de manière à permettre d'installer une autre colonne d'appareils.

Le dispositif de distribution selon l'invention offre la possibilité d'avoir un grand nombre de connecteurs par phase, ce qui permet de réaliser des dérivations de départ ou d'arrivée de fort calibre (jusqu'à 2500A environ).

Par ailleurs, le dispositif de distribution de l'invention assure une parfaite protection des personnes qui ne peuvent avoir accès à des pièces sous tension. On voit dans la figure 4, que, même si aucun connecteur, n'est embroché le doigt 400 d'un utilisateur ne peut entrer en contact avec les barres sous tension 21 ou 22.

Lorsque le connecteur est embroché, figure 5, le doigt 500 d'un utilisateur ne peut venir en contact avec les pièces 71, 72 sous tension.

## Revendications

1. Dispositif de distribution électrique à basse tension comprenant un jeu de barres (11, 21, 31, 41) de puissance et une pluralité de départs (d1, d2, ... dn) protégés par un appareil de coupure (D1, D2, ... Dn), caractérisé en ce qu'il comprend une structure isolante moulée comprenant deux parois verticales parallèles (1, 2) séparées par une cloison verticale transversale (3), des profilés métalliques (10, 20, 30, 40) étant insérés dans la cloison transversale et débouchant de part et d'autre de celle-ci, d'un côté servant de support des barres (11, 21, 31, 41) et de l'autre comme prises de puissance (12, 22, 32, 42), les extrémités desdites prises de puissance étant disposées selon les génératrices d'un cylindre d'axe vertical situé dans le plan de symétrie de la structure, ladite structure étant, du côté des prises, divisée par des coloisons horizontales définissant des alvéoles, l'alvéole pouvant recevoir une pièce isolante (66) portant des pinces (71, 72) lesdites pinces pinçant d'un côté l'une desdites prises et de l'autre un couteau métallique (116) d'une borne d'un appareil à relier, ledit couteau passant par une ouverture (67) de ladite pièce isolante située au milieu de celle-ci, de telle sorte que toutes les liaisons électriques entre les appareils et le dispositif de distribution se font selon une ligne unique d'embrochage.

2. Dispositif selon la revendication 1, caractérisé en ce que les pièces porte-pinces comportent deux faces parallèles (61, 62) reliées par des cloisons (63, 64, 65) isolant les prises les unes des autres, et/ou servant d'appui aux pinces et une cloison servant de face frontale (66) et dans laquelle est pratiquée ladite ouverture (67).

3. Dispositif selon la revendication 2, caractérisé en ce que les pinces comprennent quatre pièces métalliques (71, 72, 73, 74) plates, perpendiculaires, réunies, en deux groupes superposés, par des clips métalliques élastiques (75, 76, 77, 78).

4. Dispositif selon l'une des revendications 1 à 3, caractérisé en ce que la structure est fermée, du côté des barres, par un capot (50) en matière isolante muni de groupes de deux cloisons (51, 52) dans lesquelles s'engagent les barres, et de cloisons (53) s'engageant dans des groupes de deux cloisons (3A, 3B) venues de moulage avec la cloison transversale (3).

5. Dispositif de distribution électrique basse tension, caractérisé en ce qu'il comprend deux dispositifs selon l'une des revendications 1 à 4 disposés dos à dos.

**Patentansprüche**

1. Elektrische Niederspannungs-Verteileranlage mit einem Satz von Leistungsschienen (11, 21, 31, 41) und mehreren durch ein Trenngerät (D1, D2, ... Dn) geschützten Abgängen (d1, d2, ... dn), dadurch gekennzeichnet, dass sie eine gegossene Isolationsstruktur mit zwei senkrechten, parallelen Wänden (1, 2) besitzt, die durch eine senkrechte querlaufende Zwischenwand (3) voneinander getrennt sind, dass Metallprofile (10, 20, 30, 40) in die Zwischenwand eingeschoben sind und zu beiden Enden derselben hervortreten und somit einerseits als Stützen für die Schienen (11, 21, 31, 41), andererseits als Leistungsanschlüsse (12, 22, 32, 42) dienen, wobei die Enden der Leistungsanschlüsse auf den Erzeugenden eines Zylinders mit senkrecht in der Symmetrieebene der Struktur gelegener Achse angeordnet sind, wobei die Struktur auf der Anschlusseite durch horizontale, Nischen bildende Zwischenwände unterteilt ist und die Nische einen Klemmen (71, 72) tragenden Isolierkörper (66) aufnehmen kann, wobei die Klemmen an der einen Seite einen der Leistungsanschlüsse und an der anderen Seite ein metallisches Messer (116) eines Anschlusses eines anzuschliessenden Gerätes einklemmen, wobei das Messer durch eine Öffnung (67) in der Mitte des Isolierkörpers hindurchtritt, derart, dass alle elektrischen Verbindungen zwischen den Geräten und der Verteileranlage entlang einer einzigen Einstecklinie erfolgen.

2. Anlage nach Anspruch 1, dadurch gekennzeichnet, dass die Klemmenträger zwei parallele Seiten (61, 62) besitzen, die durch Zwischenwände (63, 64, 65) verbunden sind und zur Isolierung der Anschlüsse gegeneinander und/oder zur Abstützung der Klemmen dienen, wobei eine Wand vorgesehen ist, die eine Vorderwand (66) bildet, in der die genannte Öffnung (67) liegt.

3. Anlage nach Anspruch 2, dadurch gekennzeichnet, dass die Klemmen vier flache, senkrechte Metallteile (71, 72, 73, 74) enthalten, die durch elastische Metallclips (75, 76, 77, 78) in zwei Gruppen übereinander vereinigt sind.

4. Anlage nach einem der Ansprüche 1 bis 3, dadurch gekennzeichnet, dass die Struktur auf der Seite der Schienen durch eine Kappe (50) aus Isoliermaterial verschlossen ist, welche Gruppen aus zwei Wänden (51, 52), in welche die Schienen eingefügt sind, sowie Zwischenwände (53) aufweist, die sich in Gruppen von zwei Wänden (3A, 3B) einfügen, die beim Giessen der querlaufenden Zwischenwand (3) mitgebildet werden.

5. Elektrische Niederspannungs-Verteileranlage, dadurch gekennzeichnet, dass sie aus zwei Rücken an Rücken angeordneten Anlagen nach einem der Ansprüche 1 bis 4 besteht.

**Claims**

1. A device for low voltage electric distribution comprising a set of power bars (11, 21, 31, 41) and a plurality of outputs (d1, d2, ... dn) protected by a break apparatus (D1, D2, ... Dn), characterized in that it comprises a molded insulating structure comprising two vertical parallel walls (1, 2) separated by a vertical transversal partition (3), with metal profiles (10, 20, 30, 40) inserted in the transversal partition and projecting at either side of said partition, on the one side acting as a support for the bars (11, 21, 31, 41) and on the other as power supplies (12, 22, 32, 42), with the ends of said power supplies being arranged in accordance with the generatrices of a cylinder with a vertical axis situated in the symmetry plane of the structure, said structure being, on the side of the supplies, divided by horizontal partitions defining sockets, with each socket capable of receiving an insulating component (66) bearing clips (71, 72), said clips clipping on one side one of said supplies and on the other a metallic blade (116) of a terminal of an apparatus to be connected, said blade passing through an opening (67) of said insulating component situated in the middle of said component, such that all the electrical connections between the aparatuses and the distribution device are made in accordance with a single insertion line.

2. A device according to claim 1, characterized in that the clip-bearing components comprise two parallel surfaces (61, 62) connected by partitions (63, 64, 65) insulating the supplies one from the others, and/or acting as support for the clips, and a partition serving as the front surface (66) and in which said opening (67) is provided.

3. A device according to claim 2, characterized in that the clips comprise four flat, perpendicular metallic components (71, 72, 73, 74) which are assembled in two superposed groups by resilient metallic clips (75, 76, 77, 78).

4. A device according to one of claims 1 to 3, characterized in that the structure is closed, on the side of the bars, by a cover (50) made of an insulating material provided with groups of two partitions (51, 52) in which the bars are engaged, and partitions (53) which engage in groups of two partitions (3A, 3B) provided during molding with the transversal partition (3).

5. A device for low voltage electric distribution, characterized in that it comprises two devices according to any one of claims 1 to 4 arranged back to back.

# FIG.1

# FIG.2

FIG. 3

160

121
120
152
119
118

117
116

115
114
151
113
112

111
110

# FIG. 4

# FIG.5

FIG. 6

# FIG.7

# FIG.8

FIG.9